# EUROPÄISCHE PATENTSCHRIFT

(11) **EP 1 068 983 B1**
(45) Veröffentlichungstag und Bekanntmachung des Hinweises auf die Patenterteilung: **09.08.2006**
(21) Anmeldenummer: 00114394.0
(22) Anmeldetag: 05.07.2000
(51) Int. Cl.: B60K 37/06, B60K 35/00, B60R 16/02, B60R 11/02

(54) **Fahrzeugkommunikationsanlage**
Vehicle communication arrangement
Système de communication dans un véhicule

(30) Priorität: 15.07.1999 DE 19933067
(43) Veröffentlichungstag der Anmeldung: 17.01.2001
(73) Patentinhaber: Volkswagen AG, 38436 Wolfsburg (DE)
(72) Erfinder: Hallas, Ernst O.,Dr., AM3 AutoMotive MultiMedia AG, 90762 Fürth (DE)
(74) Vertreter: Meyer, Enno

(56) Entgegenhaltungen:
- WO-A-97/09200
- DE-A- 4 201 657
- DE-A- 19 737 322
- DE-A- 19 737 325
- DE-A- 19 746 525
- DE-A- 19 750 736

## Beschreibung

Die Erfindung betrifft eine Fahrzeugkommunikationsanlage, welche aus einer Mehrzahl von Komponenten besteht, welche an verschiedenen Stellen des Fahrzeugs positioniert sind. Die einzelnen Komponenten der Fahrzeugkommunikationsanlage sind über einen Bus miteinander verbunden.

Es sind weithin Autoradios mit abnehmbarem Bedienteil bekannt. Derartige Autoradios mit abnehmbarem Bedienteil wurden zum Zwecke eines Diebstahlschutzes entwickelt. Nimmt der Besitzer des Fahrzeuges beim Aussteigen aus dem Fahrzeug das abgenommene Bedienteil mit, welches er wegen seiner kleinen Abmessungen allgemein problemlos in einer Jackentasche unterbringen kann, wird das im Fahrzeug verbleibende Autoradiogehäuse im Falle eines Diebstahls wertlos, da eine Bedienung des Gerätes ohne Bedienteil nicht möglich ist.

Aus DE-A-197 37 322 ist ein Autoradio, welches ein rechteckförmiges Autoradiogehäuse aufweist, auf dessen Vorderseite ein abnehmbares Bedienteil aufgesetzt ist, welches Bedienteil mit dem Autoradiogehäuse über mindestens eine Kontaktleiste verbunden ist, über welche Kontaktleiste bei aufgesetzten Bedienteil mittels der Tasten des Bedienteils eingegebene Bedienbefehle an einem im Autoradiogehäuse vorgesehenen Mikrocomputer übertragen werden, bekannt. Das Bedienteil weist einen Infrarotsender auf und an der Vorderseite des Autoradiogehäuses ist ein Infrarotempfänger vorgesehen, so daß das Bedienteil im abgenommenen Zustand als Fernbedienung dient.

Aus DE-A-197 37 325 (beinhaltet die Merkmale des Oberbegriffs des Anspruchs 1) ist eine Kommunikationsanlage für ein Kraftfahrzeug mit einer Mehrzahl von Komponenten, die an verschiedenen Stellen des Kraftfahrzeuges positioniert sind, bekannt. Die einzelnen Komponenten der Kommunikationsanlage sind über einen optischen Bus miteinander verbunden. Zur Busverwaltung ist ein Mikrocomputer vorgesehen. Jede der Komponenten der Kommunikationsanlage ist mit einem Speicher für ein eine Kommunikationsanlage individuell charakterisierendes Anlagencodesignal versehen, und der Mikrocomputer ist derart programmiert, daß er vor der Aktivierung einer der Komponenten überprüft, ob im Speicher dieser Komponente das Anlagencodesignal abgespeichert ist oder nicht. Der Mikrocomputer gibt den Betrieb der Komponente nur dann frei, wenn im Speicher der Komponente das Anlagencodesignal abgespeichert ist.

Der Erfindung liegt die Aufgabe zugrunde, eine Fahrzeugkommunikationsanlage mit einem Bedienteil aufzuzeigen, in welchem die gesamten Netzwerkverwaltungsaufgaben integriert sind und welche zugleich als Diebstahlschutz dient, Im weiteren wird eine modulare Antennenphalanx für die Kommunikationsanlage aufgezeigt.

Diese Aufgabe wird bei einer Fahrzeugkommunikationsanlage mit den im Oberbegriff des Anspruches 1 angegebenen Merkmalen durch die im gekennzeichneten Teil des Anspruches 1 angegebenen Merkmalen gelöst.

Die Erfindung und deren weitere Vorteile ergeben sich anhand der Untersprüche sowie der weiteren Beschreibung. Die Beschreibung ist beispielhaft und wird anhand von Figuren an einem konkreten Beispiel beschrieben.

Es zeigt:
- FIG 1: einen schematischen Aufbau eines Fahrzeugkommunikationssystems mit integriertem Bedienteil;
- FIG 2: einen schematischen Aufbau des Bedienteils;
- FIG 3: einen schematischen Aufbau eines Fahrzeugkommunikationssystems und weiterer integrierter Komponenten;

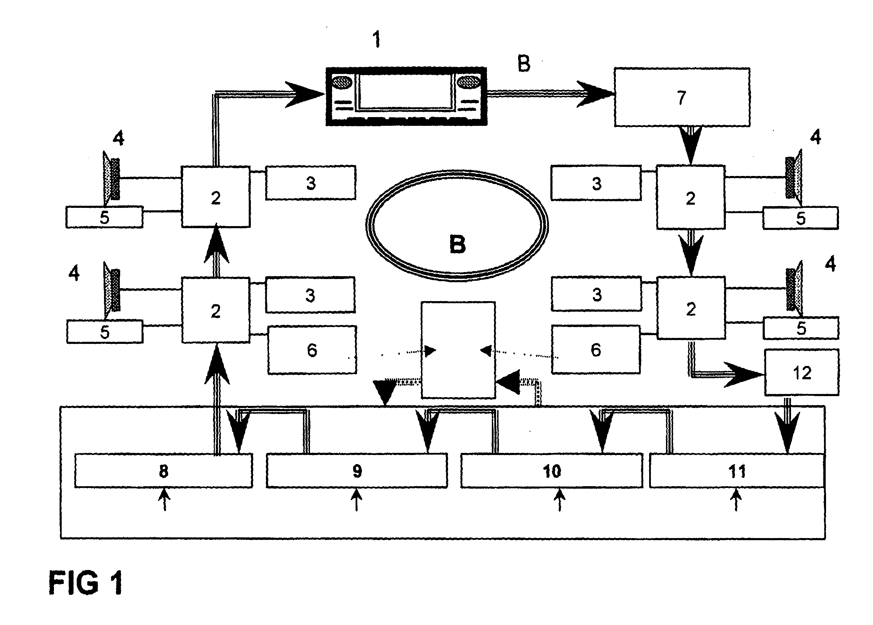

Das abnehmbare Bedienteil 1 ist in ein Fahrzeugkommunikationssystem, beispielhaft anhand von FIG 1 aufgezeigt, eingebunden. Die verschiedenen Komponenten des Kommunikationssystems sind über einen Bus B untereinander verbunden. Angeschlossen sind verschiedenen Module, zum Beispiel Sitzplatzmodule 2. An diese Sitzplatzmodule 2 sind wiederum Keypads 3 Lautsprecher 4, Aktuatoren 5, beispielsweise Fensterheber, sowie Kopfhöreranschlussbuchsen 6 angebunden. Die Sitzplatzmodule 2 sind in den jeweiligen Türen des Kraftfahrzeuges angeordnet. Die Sitzplatzmodule 2 können auch sitzplatzbezogen an anderen geeigneten Stellen im Chassis eines Fahrzeuges untergebracht sein, Insbesondere hat sich als vorteilhaft erwiesen die Sitzplatzmodule 2 für die Fondpassagiere in den Rückenlehnen der Vordersitze zu plazieren bzw. in die Armlehne der Fondsitzbank oder unter der Fondsitzbank. Für den Beifahrer hat es ich als vorteilhaft erwiesen das diesem zugeordnete Sitzplatzmodul 2 unter dem Beifahrersitz oder in der Mittelkonsole neben dem Beifahrer anzuordnen, Im weiteren ist eine Freisprecheinrichtung 7, ein Rundfunktuner 8, ein GSM-Sende-/Empfangsmodul 9, ein GPS-Empfangsmodul 10 sowie ein DAB-Empfangsmodul 11 an den Bus B angeschlossen. Der Bus B ist als Ringstruktur ausgelegt. Im weiteren ist ein Compact-Disk-Wechsler 12 vorgesehen. Sämtliche Komponenten der Kommunikationsanlage sind untereinander über die Ringstruktur des Busses B verbunden. Über das Bedienteil 1 können die Funktionen sämtlicher Komponenten eingestellt bzw. verändert werden. Hierbei ist in aktive und passive Komponenten zu unterscheiden. Unter passiven Komponenten sind Komponenten wie zum Beispiel die Lautsprecher 4 zu verstehen, da diese nur Funktionen ausführen, wie etwa die Wiedergabe von Tonsignalen. Diese Komponenten empfangen über den Bus B lediglich "Anweisungen", d.h. passive Komponenten empfangen nur Daten und senden selbst keine Daten über den Bus B. Daher ist es vorteilhaft, passive Komponenten an aktive Komponenten zu koppeln. So werden die Lautsprecher 4 über die Sitzplatzmodule 2, aktive Komponenten, angesteuert. Die Einstellung der Funktionsweise der Lautsprecher und die wiederzugebenden Signale, beispielsweise Lautstärke, Höhen/Tiefen, bzw. Musik etc. wird im allgemeinen über das Bedienteil 1 ausgewählt und eingestellt. Diese Anweisungen werden von den Sitzplatzmodulen 2 empfangen und ausgewertet und an die Lautsprecher 4 übergeben, welche die Musik wiedergeben. Die Lautsprecher 4 sind jeweils mit einer Verstärkereinheit, welche in FIG 1 nicht dargestellt ist, gekoppelt. Über diese Verstärkereinheit ist die Wiedergabe der jeweiligen Lautsprecher 4, wie Lautstärke, Höhen, Tiefen, etc. einstellbar. Die Verstärkereinheit sendet auf Anfrage des Bedienteils 1 die aktuellen Einstellungsparameter der jeweiligen Lautsprecher 4 an das Bedienteil 1, welche diese Daten visuell auf einem Display 30 darstellt.

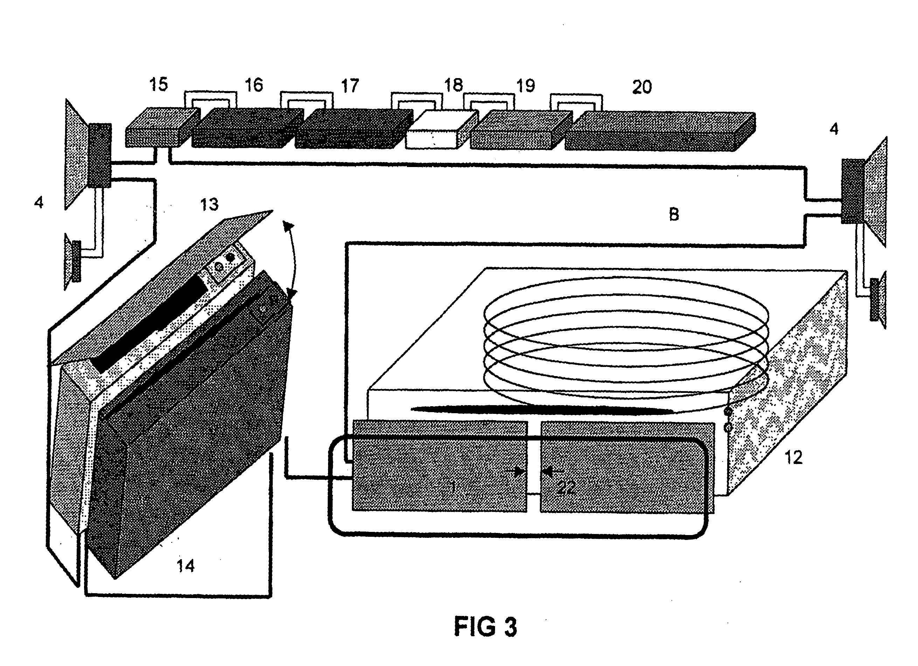

Über die Sitzplatzmodule 2 und die angeschlossenen Keypads 3 können die an den Sitzplatzmodulen 2 angeschlossenen passiven Elemente, beispielsweise die Lautsprecher 4 oder die Kopfhöreranschlussbuchsen 6 des jeweiligen Sitzplatzmoduls 2 angesteuert werden. Dies bedeutet, daß über die Sitzplatzmodule 2, beispielsweise die Lautstärke der dort angeschlossenen Lautsprecher 4 über das Keypad 3 individuell für das entsprechende Sitzplatzmodul 2 eingestellt werden kann. Dies kann jedoch nur im Rahmen der, durch das Bedienteil 1 vorgegebenen Bereiche für die beispielsweise Lautstärkeeinstellung erfolgen. Insoweit ist es möglich, von jedem Sitzplatz im Fahrzeug die individuelle Einstellungen der an das jeweilige Sitzplatzmodul 2 angeschlossenen passiven Komponenten einzustellen. Im weiteren sind, wie in FIG 3 exemplarisch aufgezeigt, Wiedergabeeinheiten 12, 13, 14 in die Fahrzeugkommunikationsanlage integriert. Diese Wiedergabeeinheiten 12, 13, 14 können beispielsweise ein Kassettenlaufwerk 13, ein CD-Rom-Wechsellaufwerk 12, ein DVD-Laufwerk 14, oder jedes weitere Datenwiedergabegerät sein. Diese Wiedergabeeinheiten 12, 13, 14 sind mit je einer Busschnittstelle ausgestattet, um sie an den Bus B des Kommunikations- bzw. Multimediasystems anschließbar zu machen.

Im weiteren ist eine Antennenphalanx, bestehend aus Empfangsmodulen 8, 9, 10, 11 in die Fahrzeugkommunikationsanlage integriert. Bei diesen Empfangsmodulen 8, 9, 10, 11 handelt es sich um eine Rundfunkempfangsmodul 8, ein GMS Sende/Empfangsmodul 9, ein GPS Empfangsmodul 10 und ein DAB-Empfangsmodul 11. Zu den jeweiligen Empfangsmodulen 8, 9, 10, 11 sind jeweils zugehörige aktive, d.h. steuerbare Antenneneinheit 16, 17, 18, 19, 20 vorgesehen, Im weiteren ist in die Antennenphalanx eine Steuereinheit 15 integriert, welche die Antenneneinheiten 16, 17, 18, 19, 20 ansteuert und die Steuerdaten für die Antenneneinheiten 16, 17, 18, 19, 20 über den Bus B empfängt, auswertet und an die zugehörige Antenneneinheit leitet, sowie die von der Antenneneinheit empfangenen und bereits vollständig aufbereiteten Signale, nicht die HF-Antennensignale, auf den Bus B legt.

Es ist eine Antenneneinheit 16 für den Empfang von Rundfunksignalen, eine Antenneneinheit 17 für den Empfang von Fernsehsignalen, eine Antenneneineit 18 zum Empfang von GPS-Signalen, eine Antenneneinheit 19 zum Empfang von GSM-Signalen sowie eine Antenneneinheit 20 für den Empfang von DAB-Signalen (Digital Audio Broadcast) vorgesehen.

Die Antennenphalanx mit den Antenneneinheiten 15 bis 20 ist in der Art ausgestaltet, daß sie modular erweitert werden kann. Der Bus B des Kommunikationssystems ist lediglich an das Steuermodul 15 angeschlossen. Das Steuermodul 15 wiederum ist über einen zweiten Bus, einem internen Bus nur für die Antennenphalanx, mit den einzelnen Antenneneinheiten 16, 17, 18, 19, 20 verbunden. Soll ein Sendewechsel erfolgen, so wird über das Bedienteil 1 diese Funktion initialisiert und über den Bus B an das Steuermodul 15 geleitet. Das Steuermodul 15 wertet aus, welche der Antenneneinheiten 16, 17, 18, 19, 20 die Funktion ausführen muß. Um den Bus B nicht mit Daten zu belasten, sind die Empfangsmodule 8, 9, 10, 11 (wie in FIG 1 mittel der Pfeile dargestellt) mit der Antennenphalanx d.h. mit jedem zum jeweiligen Empfangsmodul 8, 9, 10, 11 zugehörige Antenneneinheit 16, 17, 18, 19, 20 verbunden. Die Empfangsmodule 8, 9, 10, 11 bereiten die HF-Signale der Antenneneinheiten entsprechend auf.

In einer weiteren Ausgestaltung der Erfindung komprimiert bzw. codiert die Steuereinheit 15 die von der jeweiligen Antenneneinheit empfangenen Signale und legt diese komprimierten bzw. codierten Daten auf den Bus B. Die zugehörige Empfangseinheit 8, 9, 10 oder 11 dekomprimiert bzw. decodiert diese Daten und sendet diese an die zugehörigen Lautsprecher 4 zur Wiedergabe.
Anhand eines Rundfunksignals wird dies exemplarisch näher erläutert. Über die Bedienteil 1 wird ein Sendewechsel durchgeführt. Beispielsweise soll von einer Rundfunkstation A auf eine Rundfunkstation B gewechselt werden. Dieser Senderwechsel wird über das Bedienteil 1 eingegeben. Das Bedienteil 1 leitet diese Information an den Rundfunktuner 8 weiter. Dieser steuert die Steuereinheit 15 an, welche wiederum die Antenneneinheit 16 auf die entsprechende Mittenfrequenz zum Empfang einstellt. Die Antenneneinheit 16 leitet die nunmehr neu empfangenen Daten an die Steuereinheit 15 weiter.
Diese komprimiert bzw. decodiert die Daten und legt diese auf den Bus B. Der Rundfunktuner 8 erhält über den Bus B die Daten, dekomprimiert bzw. decodiert sie und leitet sie an die entsprechende Wiedergabeeinheit, die Lautsprecher 4, weiter.

In einer besonders vorteilhaften Ausgestaltung der Erfindung sind die Empfangsmodule 8, 9, 10, 11 in den Antenneneinheiten 16, 17, 18, 19, 20 integriert. Die Besonderheit dieses Anordnung liegt darin, daß die komplette Signalaufbereitung, ohne Signalverluste durch den Signaltransport über teure Hochfrequenzkabel im uncodierten Fall oder durch Codierungs- bzw. Decodierungsalgorithmen, in geringster Entfernung von der Antenne vorgenommen werden kann. In der Ausgestaltung der Erfindung ist nunmehr eine Antennenphalanx von gleichen (Multitunersystemen) oder unterschiedlichen Antenneneinheit 16, 17, 18, 19, 20 von einer Steuereinheit 15 mit nur einem Businterface mit Gatewayfunktion für die gesamte Antennen-Tuner-Phalanx angesteuert wird. In der herkömmlichen Weise müßte ansonsten jede Antennen-Tuner-Einheit 8, 9, 10, 11, 16, 17, 18, 19, 20 ein eigenes Businterface für den Bus B aufweisen. Aufgrund der körperlichen Nähe kann dies nach dem beschriebenen Prinzip durch einen antennenphalanxinternen Bus mit elektrischen Leitungen im Sinne eines Backbone bzw. Daisy Chainings sehr viel einfacher ausgeführt werden. Eine besonders für Massentransportmittel, z. B. Reisebus oder Bahnwagon, geeignete Anordnung wird im nachfolgenden beschrieben. Der Vorteil, daß nur ein Businterface für eine Antennen-Tuner-Transmitter-Phalanx vorhanden ist, wird nachfolgend anhand einer Anordnung an/in bzw. für einen Reisebus näher beschrieben. Auf dem Dach des Reisebusses wird in geeigneter Weise die Antennen-Tuner-Transmitter-Phalanx angeordnet, z. B. in Form eines Spoilers. In diesem Spoiler sind sowohl die Antennen, als auch deren Verstärker und die betreffenden Tuner, Transmitter und/oder Datenaufbereitungsmodule untergebracht. Der Spoiler als Ganzes verfügt über eine Schnittstelle zum Bussystem. Es sind unterschiedliche FM/AM-Tuner im Spoiler integriert, DAB-Tuner, TV-Tuner GSM-Einheiten und eine GPS-Einheit. Die Tuner können den unterschiedlichen Programmwünschen der Fahrgäste entsprechend programmiert bzw. eingestellt werden. Es ist denkbar die FM/AM-Tuner auf den PI-Code für Nachrichten-, Sport-, Rockmusik-, Klassik- und/oder Popmusiksendungen zu programmieren. Die RDS-Signalauswertung kann z.B. für zwei geeignete FM-Sender vorbereitet sein, zum einen für Trafficprogram-Daten, TMC-Daten, zum anderen für die Alternativfrequenzen, oder für lokale Sender oder für überregionale Sender. In gleicher Weise wie die FM/AM-Tuner können die DAB-Tuner und/oder die TV-Tuner programmiert sein.
Bei den GSM-Einheiten ist Verbindungsredundanz gegeben, wenn z.B. gleichzeitig über ein GSM-Modul Daten für dynamische Navigation übertragen werden, während auf dem zweiten GSM-Modul ein Gespräch eines Fahrgastes mit extern geführt wird. Über ein weiteres Modul ist z.B. ein Zugang zum Internet geschaltet. Die gesamte Antennen-Tuner- Transmitter-Phalanx weist nur einen Controller (Steuereinheit) mit einem Businterface zur Kommunikation und Bedienung auf.

Im weiteren ist ein Spracherkennungs/Steuerungsmodul 22 vorgesehen. Über dieses kann mit Spracheingabe die Funktionalität des Bedienteils 1 gesteuert werden.

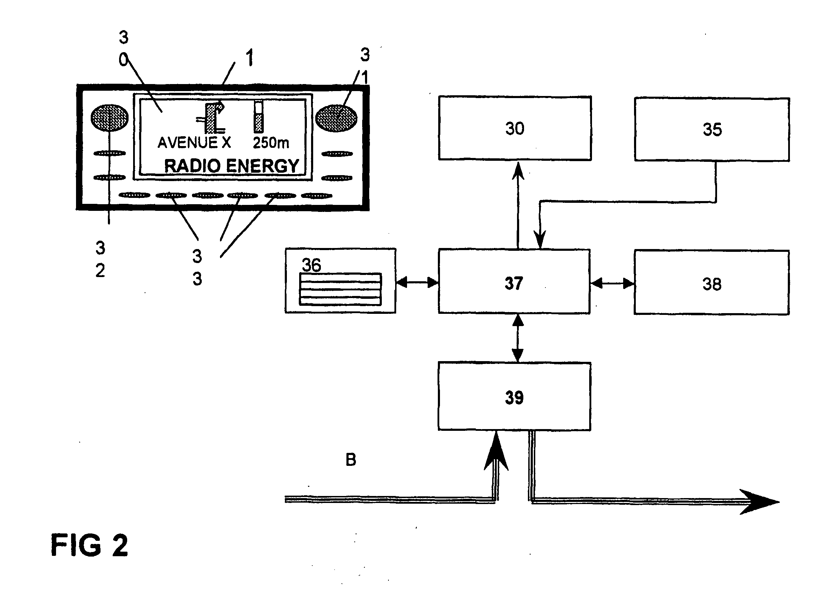

Das Bedienteil 1 besteht, wie in FIG 2 exemplarisch dargestellt, aus einem Display 30, verschiedenen Funktionstasten und Einstellreglern 31, 32, sowie verschiedenen Tasten 33, 34. An das Bedienteil 1 ist über eine Schnittstelle eine Tastatur 35 anschließbar. Über diese Tastatur 35 können umfangreiche Bedienbefehle eingegeben werden. Im weiteren sind verschiedene Kontaktstellen 36 für MultiMediaCards vorgesehen. Über diese Kontaktstellen 36 für MultiMediaCards können verschiedenste Daten von den MultiMediaCards an das Bedienteil 1 geleitet werden. Im weiteren ist ein Mikrocomputer 37 in das Bedienteil 1 integriert. Das Bedienteil 1 weist weiter einen Signalprozessor 38 zur Bearbeitung von Audiodaten auf sowie ein Businterface 39.

Als besonders vorteilhaft hat sich erweisen die MultiMediaCards gezielt zur Speicherung zu verwenden. Über ein Spracherkennungs/Steuerungsmodul 22 kann ein Nutzer das Bedienteil 1 als Diktiergerät während der Fahrt benuzten, Das Diktat wird dann auf einer der kontaktierten MultiMediaCards gespeichert und kann aus dem Fahrzeug entnommen und über eine Abspieleinheit später von einer anderen Person abgehört werden, oder direkt in einen Computer zur Spracherkennung überführt werden, In einer weiteren vorteilhaften Ausgestaltung der Erfindung wird das Diktat nach Beendigung von dem Spracherkennungs/Steuerungsmodul 22 mittel einer Spech-to-Text-Funktion in Text umgesetzt und als Textdatei auf der MultiMediaCard gespeichert.

Der Mikrocomputer 37 ist in der Weise ausgestaltet, daß er als Headunit für das Bussystem B arbeitet. Die gesamte Funktionalität des Bussystems B der Kommunikationsanlage ist in das Bedienteil 1 integriert. Das Bedienteil 1 steuert über den Mikrocomputer 37 das gesamte Busnetzwerk. Der Signalprozessor 38 ist zur Unterstützung des Mikrocomputer 37 vorgesehen. Der Signalprozessor 38 übernimmt die Steuerung und Wiedergabe der gesamten Audiosignaldaten im Bussystem. Diese Daten werden, unter Kontrolle des Mikrocomputers 37 von dem Signalprozessor 38 ausgewertet, bearbeitet und - über den Mikrocomputer 37 - über das Businterface 39 an die entsprechenden Module und Einheiten geleitet.

Das Bedienteil 1 ist in das Armaturenbrett eines Fahrzeuges integriert und weist elektrische und mechanische Trennstellen auf. Über diese elektrischen und mechanischen Trennstellen ist das Bedienteil 1 in das Bussystem B integriert und kann über diese Trennstellen aus dem Bussystem der Kommunikationsanlage herausgelöst werden. Bei Entfernen des Bedienteils 1 wird die gesamte Funktionalität des Bussystems B unterbrochen, der Bus ist nicht weiter funktionsfähig. Somit stellt die Entfernung des Bedienteils 1 einen Diebstahlschutz für die gesamte Fahrzeugkommunikationsanlage dar. Um eine Funktionalität auch bei abgenommenen Zustand zu gewährleisten, d.h. damit die im Bedeinteil 1 gespeicherten Daten nicht verloren gehen, ist das Bedienteil 1 mit einem Energiespeicher, beispielsweise einem Akkumulator oder einem Gold-Cap-Energiespeicher ausgestattet. Im weiteren weist das Bedienteil 1 einen Transponder und die im Armaturenbrett vorhandenen Gegenschnittstelle zum Bedienteil 1 einen zum Transponder passenden Empfänger auf. Auf dieses Weise ist gewährleistet, daß ein Bedienteil 1 jeweils nur in der jeweiligen Kommunikationsanlage betrieben werden kann, auf welche das Bedienteil 1 über den Transponder abgestimmt ist. Das Transpondersignal kann sich auch als variierender Code nach Erkennung der richtigen Identität im Gegenstück ändern. Im weiteren werden die Transpondercodes in jedem an das Bussystem angeschlossenen Gerät gespeichert. Dies hat zur Folge, daß sämtliche an den Bus B angeschlossenen Einheiten nur arbeiten, wenn das der Kommunikationsanlage zugehörige Bedienteil 1 mit dem Bussystem B verbunden ist. Es kann folglich nur ein Bedienteil 1 die Kommunikationsanlage aktivieren. Im weiteren kann nur das Bedienteil 1 mit dem entsprechenden Transpondersignal, welches dem der Kommunikationsanlage zugeordnet ist, die Kommunikationsanlage freigeben. Auch bei Entfernung einzelner Komponenten aus der Kommunikationsanlage und/oder dem Bussystem B sind diese nur dann funktionsfähig, wenn das in dem jeweiligen Gerät gespeicherte Transpondersignal mit dem des Bedienteils 1 übereinstimmt. Durch diesen Mechanismus ist es unmöglich ein Gerät in an einem anderen Bussystem in einer anderen Kommunikationsanlage zu betreiben.

Für Wartungszwecke, Systemergänzungen um weitere Komponenten und für eventuelle Servicearbeiten ist für jede Kommunikationsanlage ein individueller Tastencode vorgesehen. Dieser wird über Tasten 31, 32, 35 oder einer Tastatur 35 eingegeben. Durch die Eingabe wird vom Mikrocomputer 37 eine neue Systemkonstellation erkennbar gemacht und die neue Konfiguration ab sofort, wie oben beschrieben, mit dem betreffenden Transpondercode identifiziert.

Im weiteren besteht auch die Möglichkeit, daß die Kommunikationsanlage und das Bedienteil 1 den Betriebscode auf das zugehörige Transpondersignal regelmäßig nach Erkennung der richtigen Identität, gegebenenfalls auch aller Komponenten, abändern. So erfolgt beispielsweise nach jeder Inbetriebnahme der Kommunikationsanlage mit dem dafür benötigten Transpondersignal eine Veränderung des Signals. Das geänderte Transpondersignal wird, wie oben beschrieben, in jeder angeschlossenen Einheit gespeichert. Auf diese Weise ist es kaum möglich, den Betriebscode zu manipulieren und die Diebstahlsicherung bei abgenommenem Bedienteil 1 zu umgehen und so die Kommunikationsanlage zu betreiben.

Im weiteren weist das Bedienteil 1 Schnittstellen auf. Bei einer solchen Schnittstelle handelt es sich beispielsweise um eine serielle Schnittstelle. Über diese serielle Schnittstelle kann ein externer Computer, beispielsweise ein Personal Assistent, angeschlossen werden, und die Daten des Personal Assistent können in die Kommunikationsanlage übertragen werden. Dies ist beispielsweise vorteilhaft, wenn die im Personal Assistent vorhandenen Telefonnummern auch in der Kommunikationsanlage vorhanden sein sollen. Auf diese Weise ist einem Benutzer möglich, auf komfortable Art und Weise sein persönliches Telefonbuch im Personal Assistent zu pflegen und an die Kommunikationsanlage im Fahrzeug zu übertragen.

In einer vorteilhaften Ausgestaltung der Erfindung ist im weiteren vorgesehen, daß ein Navigationssystem integriert ist. Das Navigationssystem stellt seine Daten auf den Display 30 der Bedienteil 1 dar. Die Sprachausgabe erfolgt über die Lautsprecher 4. Durch eine Schnittstelle zu einem externen Computer, diese Schnittstelle kann in Form einer Infrarotschnittstelle oder einer mechanischen/elektrischen Schnittstelle, beispielsweise einer seriellen oder parallelen Schnittstelle oder einer Funkschnittstelle, welche auf den Betrieb im Nahbereich ausgelegt ist, ausgeführt sein, können die Daten des Navigationssystems von einem externen Computer in das Navigationssystem im Fahrzeug übertragen werden. Dies wird ebenfalls durch den Mikrocomputer 37 der Kommunikationsanlage im Fahrzeug gesteuert.

Das Display 30 ist in vorteilhafter Ausgestaltung als grafisches Display ausgeführt. Das Display ist als Matrixdisplay oder Plasmadisplay realisiert.

In einer besonders kosteneffektiven Lösung ist das Display 30 als separates Display in Phosphor-Elektroluminiszenz-Technologie ausgestaltet und als semitransparente Folie an der Windschutzscheibe, im Sichtbereich des Fahrers, im oberen oder unteren Drittel der Windschutzscheibe, angeordnet. Die Anbringung des Displays erfolgt durch Verklebung mit der Windschutzscheibe, von innen. Das Display kann dann als separater passiver Busteilnehmer mit einem passenden Interface oder Gateway ausgerüstet, die entsprechenden Daten darstellen und/oder anzeigen. Ein besonderer Installationsaufwand ist nicht erforderlich, insbesondere bei der Nachrüstung von Fahrzeugen mit einer Kommunikationsanlage.

Der Bus B ist als optischer Bus realisiert, Insbesondere hat sich die Realisierung als D2B-Bus, MOST-Bus oder Firewire-Bus vorteilhaft erwiesen.

### Bezugszeichenliste

- B: Bussystem
- 1: Bedienteil
- 2: Sitzplatzmodul
- 3: Keypad
- 4: Lautsprecher
- 5: Aktuator
- 6: Kopfhöreranschlussbuchse
- 7: Freisprecheinrichtung
- 8: Rundfunkmodul
- 9: GMS Sende/Empfangsmodul
- 10: GPS Empfangsmodul
- 11: DAB-Empfangsmodul
- 12: Compact-Disk-Wechsler
- 13: Kassettenlaufwerk
- 14: DVD-Laufwerk
- 15: Steuermodul
- 16: Rundfunkanteneneinheit
- 17: GPS-Antenneneinheit
- 18: GSM-Antenneneinheit
- 19: Fernsehsignalempfangseinheit
- 20: DAB-Empfangseinheit
- 22: Spracherkennungs/Steuerungsmodul
- 30: Display
- 31: Einstellregler
- 32: Einstellregler
- 33: Tasten
- 34: Tasten
- 35: Tastatur
- 36: Kontaktstellen
- 37: Mikrocomputer
- 38: Signalprozessor
- 39: Businterface

## Patentansprüche

1. Fahrzeugkommunikationsanlage mit einer Mehrzahl von Komponenten, welche an verschiedenen Stellen eines Fahrzeugs positioniert sind, wobei
die einzelnen Komponenten der Fahrzeugkommunikationsanlage über einen Bus miteinander verbunden sind,
zur Verwaltung des Busses (b) eine Mikrokomputereinheit (37) vorgesehen ist, wobei die Mikrocomputereinehit (37) in einem Bedienteil (1) integriert ist und die Mikrocomputereinheit (37) die Funktion des Busses (b) steuert,
**dadurch gekennzeichnet, dass**
das Bedienteil (1) elektrische und mechanische Trennstellen aufweist, im Armaturenbrett des Fahrzeugs angeordnet ist und über eine Verriegelung/Entriegelung entnehmbar ist, wobei
das Bedienteil (1) einen Transponder aufweist, im Armaturenbrett des Fahrzeuges ein zugehöriger Empfänger integriert ist und die Fahrzeugkommunikationsanlage nur betreibbar ist, wenn das Bedienteil (1) im Armaturenbrett eingefügt ist, über die elektrischen und mechanischen Trennstellen mit der Fahrzeugkommunikationsanlage verbunden ist, der Transpondercode mit dem in der Fahrzeugkommunikationsanlage gespeicherten Code übereinstimmt und der Mikrocomputer (37) den Transpondercode nach jeder Inbetriebnahme abändert.

2. Fahrzeugkommunikationsanlage nach Anspruch 1,
**dadurch gekennzeichnet, daß**
das Bedienteil (1) die Funktionen der einzelnen Komponenten steuert und die Komponenten in aktive Komponenten, welche Daten über den Bus (B) senden und/oder empfangen, und passive Komponenten, welche lediglich Daten über den Bus (B) empfangen, eingeteilt sind und jede Komponente an den Bus (B) angeschlossen ist.

3. Fahrzeugkommunikationsantage nach einem oder mehreren der vorhergehenden Ansprüche,
**dadurch gekennzeichnet, daß**
die Komponenten mehrere Sitzplatzmodule (2), eine Freisprecheinrichtung (7), mindestens ein Rundfunkempfangstuner (8), mindestens ein GSM-Sende-/Empfangsmodul (9), mindestens ein GPS-Empfangsmodul (10) und mindestens ein DAB-Empfangsmodul (11) sind.

4. Fahrzeugkommunikationsanlage nach einem oder mehreren der vorhergehenden Ansprüche
**dadurch gekennzeichnet, daß**
an die Sitzplatzmodule (2) weitere passive Komponenten (4, 5, 6), insbesondere jeweils mindestens ein Lautsprecher (4) mindestens ein Aktuator (5) und mindestens eine Kopfhöreranschlussbuchse (6), angeschlossen sind, an die Sitzplatzmodule (2) mindestens ein Keypad (3) angeschlossen ist und die Steuerdaten für die passiven Komponenten (4, 5, 6) welche über das Bedienteil (1) eingestellt werden, wie insbesondere die Lautstärkeeinstellung der Wiedergabe der Lautsprecher (4), über die Sitzplatzmodule (2) gesteuert werden.

5. Fahrzeugkommunikationsanlage nach einem oder mehreren der vorhergehenden Ansprüche,
**dadurch gekennzeichnet, daß**
an den Bus (B) ein Navigationssystem angeschlossen ist und die für einen Fahrer darzustellenden Navigationsdaten und Fahrtroutenhinweise in visueller Form auf dem Display (30) dargestellt werden und die akustischen Hinweise über die Lautsprecher (4) ausgegeben werden.

6. Fahrzeugkommunikationsanlage nach einem oder mehreren der vorhergehenden Ansprüche,
**dadurch gekennzeichnet, daß**
das Bedienteil (1) ein Display (30), einen Signalprozessor (38), ein Businterface (39), Schnittstellen (36) zum Anschluß von MultiMediaCards, eine Schnittstelle zum Anschluß einer Tastatur (35) und eine Schnittstelle zum Anschluß eines Computers aufweist und der Signalprozessor (38) die im Bus (B) zu übertragenden Audiodaten bearbeitet und über die Schnittstelle zum Anschluß eines Computers mit einem angeschlossen Computer Daten, insbesondere Adressdaten für Zielbestimmung für das Navigationssystem und/oder Telefonnummern für die Freisprecheinrichtung (7) und das zugehörige Telefon an die Fahrzeugkommunikationsanlage übertragen werden.

7. Fahrzeugkommunikationsanlage nach einem oder mehreren der vorhergehenden Ansprüche,
**dadurch gekennzeichnet, daß**
die Sitzplatzmodule (2) an geeigneten Stellen des Chassis des Fahrzeuges angeordnet sind und/oder die Sitzplatzmodule (2) für Fondpassagiere in den hinteren Türen des Fahrzeuges oder unter der Fondsitzbank oder in der Armlehne der Fondsitzbank oder in den Rückenlehnen der Vordersitze angeordnet sind und/oder das Sitzplatzmodul (2) für den Beifahrer in der Beifahrertür oder unter dem Beifahrersitz oder in der Mittelkonsole oder im Armaturenbrett angeordnet ist.

8. Fahrzeugkommunikationsanlage nach einem oder mehreren der vorhergehenden Ansprüche,
**dadurch gekennzeichnet, daß**
in die Fahrzeugkommunikationsanlage verschieden Wiedergabeeinheiten (13, 14, 12), insbesondere ein Kassettenlaufwerk (13), ein DVD-Laufwerk (14) und ein CD-ROM-Wechsellaufwerk (12), integriert ist, die Wiedergabeeinheiten an den Bus (B) angeschlossen sind und das Bedienteil (1) die Funktionen der Wiedergabeeinheiten (13, 14, 12) steuert.

9. Fahrzeugkommunikationsanlage nach einem oder mehreren der vorhergehenden Ansprüche,
**dadurch gekennzeichnet, daß**
die Einstellungsparameter der an die Sitzplatzmodule (2) angeschlossenene aktiven und passiven Komponenten (3, 4, 5, 6) auf Anfrage des Bedienteils (1) auf dem Display (30) visuell darstellbar sind.

10. Fahrzeugkommunikationsanlage nach einem oder mehreren der vorhergehenden Ansprüche,
**dadurch gekennzeichnet, daß**
das Bedienteil (1) über das Spracherkennung/Steuerungsmodul (22) in Verbindung mit der Freisprecheinrichtung (7) gesprochene Diktate des Fahrers oder eines Beifahrers aufzeichnet und diese auf eine, über eine Schnittstelle 36 angeschlossenen, MultiMediaCard speichert und/oder das Bedienteil (1) eine Speech-To-Text Funktionalität aufweist und das gesprochene Diktat in ein Text wandelt und diesen Text auf die MultiMediaCard speichert.

11. Fahrzeugkommunikationsanlage nach einem oder mehreren vorhergehenden Ansprüche,
**dadurch gekennzeichnet, daß**
eine Antennenphalanx über den Bus (B) angeschlossen ist und die Antennenphalanx aus mindestens einem Empfangsmodul (8, 9, 10, 11), mindestens einer Antenneneinheit (16, 17, 18, 19, 20) und mindestens einem Steuermodul (15) besteht.

12. Fahrzeugkommunikationsanlage nach Anspruch 11,
**dadurch gekennzeichnet, daß**
die Antenneneinheiten (16, 17, 18, 19, 20) über eine Steuereinheit (15) an den Bus (B) angeschlossen sind und die Steuereinheit (15) die Antenneneinheiten (16, 17, 18, 19, 20) über einen zweiten Bus, mittels welchem die Antenneneinheiten (16, 17, 18, 19, 20) und die Steuereinheit (15) verbunden sind, steuert und/oder das Empfangsmodul (8) eine Rundfunkempfangsmodul, das Empfangsmodul (9) ein GMS Sende/Empfangsmodul, das Empfangsmodul (10) ein GPS Empfangsmodul und das Empfangsmodul (11) ein DAB-Empfangsmodul ist und/oder die Antenneneinheit (16) für den Empfang von Rundfunksignalen, die Antenneneinheit (17) für den Empfang von Fernsehsignalen, die Antenneneineit (18) zum Empfang von GPS-Signalen. die Antenneneinheit (19) zum Empfang von GSM-Signalen und die Antenneneinheit (20) für den Empfang von DAB-Signalen vorgesehen ist.

13. Fahrzeugkommunikationsanlage nach Anspruch 11 oder 12,
**dadurch gekennzeichnet, daß**
die Empfangsmodule (8, 9, 10, 11) in den Antenneneinheiten (16, 17, 18, 19, 20) integriert sind um in geringster Entfernung zur Antenne angeordnet zu sein und/oder der Bus (B) ein optischer Bus, insbesondere ein D2B-Bus, ein MOST-Bus oder ein Firewire-Bus, ist.

## Claims

1. Vehicle communication system having a plurality of components which are positioned at various points in a vehicle, where
the individual components of the vehicle communication system are connected to one another by means of a bus,
a microcomputer unit (37) is provided for managing the bus (b), the microcomputer unit (37) being integrated in a control part (1), and the microcomputer unit (37) controlling the operation of the bus (b),
**characterized in that**
the control part (1) has electrical and mechanical isolating points, is arranged in the vehicle's dashboard and can be removed by means of locking/unlocking, where
the control part (1) has a transponder, the vehicle's dashboard has an associated receiver integrated in it and the vehicle communication system can be operated only when the control part (1) has been inserted into the dashboard and is connected to the vehicle communication system via the electrical and mechanical isolating points, the transponder code matches the code stored in the vehicle communication system and the microcomputer (37) modifies the transponder code after each startup.

2. Vehicle communication system according to Claim 1,
**characterized in that**
the control part (1) controls the functions of the individual components, and the components are classified as active components, which send and/or receive data via the bus (B), and passive components, which merely receive data via the bus (B), and each component is connected to the bus (B).

3. Vehicle communication system according to one or more of the preceding claims,
**characterized in that**
the components are a plurality of seat modules (2), a hands-free device (7), at least one broadcast radio reception tuner (8), at least one GSM transmission/reception module (9), at least one GPS reception module (10) and at least one DAB reception module (11).

4. Vehicle communication system according to one or more of the preceding claims,
**characterized in that**
the seat modules (2) have further passive components (4, 5, 6), particularly at least one loudspeaker (4), at least one actuator (5) and at least one headphones connection socket (6), respectively, connected to them, the seat modules (2) have at least one keypad (3) connected to them, and the control data for the passive components (4, 5, 6), which are set by means of the control part (1), such as the volume setting for the reproduction on the loudspeakers (4), in particular, are controlled by means of the seat modules (2).

5. Vehicle communication system according to one or more of the preceding claims,
**characterized in that**
the bus (B) has a navigation system connected to it and the navigation data and journey route advice which are to be presented for a driver are presented in visual form on the display (30) and the audio advice is output on the loudspeakers (4).

6. Vehicle communication system according to one or more of the preceding claims,
**characterized in that**
the control part (1) has a display (30), a signal processor (38), a bus interface (39), interfaces (36) for connecting multimedia cards, an interface for connecting a keypad (35) and an interface for connecting a computer, and the signal processor (38) handles the audio data which are to be transmitted on the bus (B), and the interface for connecting a computer is used, when a computer has been connected, to transmit data, particularly address data for determining a destination for the navigation system and/or telephone numbers for the hands-free device (7) and the associated telephone, to the vehicle communication system.

7. Vehicle communication system according to one or more of the preceding claims,
**characterized in that**
the seat modules (2) are arranged at suitable points on the chassis of the vehicle and/or the seat modules (2) for rear passengers are arranged in the rear doors of the vehicle or under the rear seat or in the armrest of the rear seat or in the backrests of the front seats, and/or the seat module (2) for the passenger is arranged in the passenger door or under the passenger seat or in the central console or in the dashboard.

8. Vehicle communication system according to one or more of the preceding claims,
**characterized in that**
the vehicle communication system has various reproduction units (13, 14, 12), particularly a cassette drive (13), a DVD drive (14) and a CD-ROM changer (12), integrated in it, the reproduction units are connected to the bus (B) and the control part (1) controls the functions of the reproduction units (13, 14, 12).

9. Vehicle communication system according to one or more of the preceding claims,
**characterized in that**
the setting parameters for the active and passive components (3, 4, 5, 6) connected to the seat modules (2) can be presented visually on the display (30) at the request of the control part (1).

10. Vehicle communication system according to one or more of the preceding claims,
**characterized in that**
the control part (1) uses the voice-recognition/control module (22) in conjunction with the hands-free device (7) to record spoken dictations from the driver or from a passenger and stores them on a multimedia card connected by means of an interface (36), and/or the control part (1) has a speech-to-text functionality and converts the spoken dictation into a text and stores this text on the multimedia card.

11. Vehicle communication system according to one or more of the preceding claims,
**characterized in that**
an antenna phalanx is connected by means of the bus (B), and the antenna phalanx comprises at least one reception module (8, 9, 10, 11), at least one antenna unit (16, 17, 18, 19, 20) and at least one control module (15).

12. Vehicle communication system according to Claim 11,
**characterized in that**
the antenna units (16, 17, 18, 19, 20) are connected to the bus (B) by means of a control unit (15), and the control unit (15) controls the antenna units (16, 17, 18, 19, 20) via a second bus, by means of which the antenna units (16, 17, 18, 19, 20) and the control unit (15) are connected, and/or the reception module (8) is a broadcast radio reception module, the reception module (9) is a GMS transmission/reception module, the reception module (10) is a GPS reception module and the reception module (11) is a DAB reception module, and/or the antenna unit (16) is provided for receiving broadcast radio signals, the antenna unit (17) is provided for receiving television signals, the antenna unit (18) is provided for receiving GPS signals, the antenna unit (19) is provided for receiving GSM signals and the antenna unit (20) is provided for receiving DAB signals.

13. Vehicle communication system according to Claim 11 or 12,
**characterized in that**
the reception modules (8, 9, 10, 11) are integrated in the antenna units (16, 17, 18, 19, 20) in order to be arranged at a very short distance from the antenna, and/or the bus (B) is an optical bus, particularly a D2B bus, a MOST bus or a Firewire bus.

## Revendications

1. Équipement de communication pour véhicule comprenant une pluralité de composants qui sont positionnés en différents endroits d'un véhicule, les composants individuels de l'équipement de communication pour véhicule étant reliés entre eux par le biais d'un bus, une unité à micro-ordinateur (37) étant prévue pour la gestion du bus (B), l'unité à micro-ordinateur (37) étant intégrée dans une partie commande (1) et l'unité à micro-ordinateur (37) commandant le fonctionnement du bus (B), **caractérisé en ce que** la partie commande (1) présente des points de coupure électriques et mécaniques, est disposée dans le tableau de bord du véhicule et peut être retirée par le biais d'un dispositif de verrouillage/déverrouillage, la partie commande (1) présentant un transpondeur, un récepteur correspondant étant intégré dans le tableau de bord du véhicule et l'équipement de communication pour véhicule ne pouvant fonctionner que lorsque la partie commande (1) est insérée dans le tableau de bord, reliée à l'équipement de communication pour véhicule par le biais des points de coupure électriques et mécaniques, le code du transpondeur coïncide avec le code enregistré dans l'équipement de communication pour véhicule et le micro-ordinateur (37) modifiant le code du transpondeur après chaque mise en service.

2. Équipement de communication pour véhicule selon la revendication 1, **caractérisé en ce que** la partie commande (1) commande les fonctions des composants individuels et les composants sont divisés en composants actifs qui émettent et/ou reçoivent des données par le biais du bus (B) et en composants passifs qui reçoivent uniquement des données par le biais du bus (B) et chaque composant est raccordé au bus (B).

3. Équipement de communication pour véhicule selon une ou plusieurs des revendications précédentes, **caractérisé en ce que** les composants sont plusieurs modules de place assise (2), un dispositif de conversation mains libres (7), au moins un récepteur radio (8), au moins un module émetteur/récepteur GSM (9), au moins un module récepteur GPS (10) et au moins un module récepteur DAB (11).

4. Équipement de communication pour véhicule selon une ou plusieurs des revendications précédentes, **caractérisé en ce que** des composants passifs (4, 5, 6) supplémentaires sont raccordés aux modules de place assise (2), notamment à chaque fois un haut-parleur (4), au moins un actionneur (5) et au moins une prise de raccordement pour casque (6), au moins un clavier (3) est raccordé aux modules de place assise (2) et les modules de place assise (2) commandent les données de commande pour les composants passifs (4, 5, 6), lesquelles sont réglées par le biais de la partie commande (1), comme notamment le réglage du volume de reproduction sonore du haut-parleur (4).

5. Équipement de communication pour véhicule selon une ou plusieurs des revendications précédentes, **caractérisé en ce qu'**un système de navigation est raccordé au bus (B) et les données de navigation ainsi que les instructions de trajet à représenter à l'attention d'un conducteur sont représentées sur l'écran (30) et les instructions sonores sont délivrées par le biais du haut-parleur (4).

6. Équipement de communication pour véhicule selon une ou plusieurs des revendications précédentes, **caractérisé en ce que** la partie commande (1) présente un écran (30), un processeur de signal (38), une interface de bus (39) , des interfaces (36) pour le raccordement de cartes multimédia, une interface pour le raccordement d'un clavier (35) et une interface pour le raccordement d'un ordinateur et le processeur de signal (38) traite les données audio à transmettre dans le bus (B) et des données, notamment des données d'adresse pour la détermination de la destination par le système de navigation et/ou des numéros de téléphone pour le dispositif de conversation mains libres (7) et le téléphone correspondant sont transmises avec un ordinateur raccordé à l'équipement de communication pour véhicule par le biais de l'interface pour le raccordement d'un ordinateur.

7. Équipement de communication pour véhicule selon une ou plusieurs des revendications précédentes, **caractérisé en ce que** les modules de place assise (2) sont disposés en des endroits appropriés du châssis du véhicule et/ou les modules de place assise (2) destinés aux passagers arrières sont disposés dans les portières arrières du véhicule ou sous la banquette arrière ou dans les accoudoirs de la banquette arrière ou dans les dossiers des sièges avant et/ou le module de place assise (2) destiné au passager avant est disposé dans la portière du passager avant ou sous le siège du passager avant ou dans la console centrale ou dans le tableau de bord.

8. Équipement de communication pour véhicule selon une ou plusieurs des revendications précédentes, **caractérisé en ce que** différentes unités de reproduction (13, 14, 12), notamment un lecteur de cassette (13), un lecteur de DVD (14) et un lecteur/changeur de CD-ROM (12), sont intégrées dans l'équipement de communication pour véhicule, les unités de reproduction sont raccordées au bus (B) et la partie commande (1) commande les fonctions des unités de reproduction (13, 14, 12).

9. Équipement de communication pour véhicule selon une ou plusieurs des revendications précédentes, **caractérisé en ce que** les paramètres de réglage des composants actifs et passifs (3, 4, 5, 6) raccordés aux modules de place assise (2) peuvent être représentés visuellement sur l'écran (30) sur demande de la partie commande (1).

10. Équipement de communication pour véhicule selon une ou plusieurs des revendications précédentes, **caractérisé en ce que** la partie commande (1) enregistre les instructions prononcées par le conducteur ou un passager par le biais du module de reconnaissance vocale/commande (22) en liaison avec le dispositif de conversation mains libres (7) et stocke celles-ci sur une carte multimédia raccordée par le biais d'une interface (36) et/ou la partie commande (1) présente une fonctionnalité « Speech-To-Text » et convertit l'instruction prononcée en un texte et stocke ce texte sur la carte multimédia.

11. Équipement de communication pour véhicule selon une ou plusieurs des revendications précédentes, **caractérisé en ce qu'**une phalange d'antenne est raccordé par le biais du bus (B) et la phalange d'antenne se compose d'au moins un module de réception (8, 9, 10, 11), d'au moins une unité d'antenne (16, 17, 18, 19, 20) et d'au moins un module de commande (15).

12. Équipement de communication pour véhicule selon la revendication 11, **caractérisé en ce que** les unités d'antenne (16, 17, 18, 19, 20) sont raccordées au bus (B) par le biais d'une unité de commande (15) et l'unité de commande (15) commande les unités d'antenne (16, 17, 18, 19, 20) par le biais d'un deuxième bus au moyen duquel les unités d'antenne (16, 17, 18, 19, 20) et l'unité de commande (15) sont reliées et/ou le module récepteur (8) est un module récepteur de radiodiffusion, le module récepteur (9) est un module émetteur/récepteur GSM, le module récepteur (10) est un module récepteur GPS et le module récepteur (11) est un module récepteur DAB et/ou l'unité d'antenne (16) est prévue pour la réception de signaux de radiodiffusion, l'unité d'antenne (17) pour la réception de signaux de télévision, l'unité d'antenne (18) pour la réception de signaux GPS, l'unité d'antenne (19) pour la réception de signaux GSM et l'unité d'antenne (20) pour la réception de signaux DAB.

13. Équipement de communication pour véhicule selon la revendication 11 ou 12, **caractérisé en ce que** les modules de réception (8, 9, 10, 11) sont intégrés dans les unités d'antenne (16, 17, 18, 19, 20) afin d'être disposés à une distance la plus faible possible par rapport à l'antenne et/ou le bus (B) est un bus optique, notamment un bus D2B, un bus MOST ou un bus Firewire.
